# EUROPEAN PATENT APPLICATION

(11) **EP 4 852 347 A1**
(43) Date of publication of application: **09.12.2026**
(21) Application number: 24938575.8
(22) Date of filing: 08.11.2024
(51) Int. Cl.: H04B 10/291

(54) **LOW-NOISE FULL-BAND FIBER AMPLIFIER AND SIGNAL TRANSMISSION SYSTEM**

(30) Priority: 14.05.2024 CN 202410596052
(71) Applicant: Accelink Technologies Co., Ltd., Wuhan, Hubei 430000 (CN); Accelink Information Technologies Co., Ltd., Wuhan, Hubei 430074 (CN)
(72) Inventor: FU, Chengpeng, Wuhan, Hubei 430000 (CN); TAO, Jintao, Wuhan, Hubei 430000 (CN); JIA, Yuanyuan, Wuhan, Hubei 430000 (CN); LEI, Rui, Wuhan, Hubei 430000 (CN); FANG, Di, Wuhan, Hubei 430000 (CN); LE, Menghui, Wuhan, Hubei 430000 (CN); BU, Qinlian, Wuhan, Hubei 430000 (CN)
(74) Representative: Patentgruppen A/S
(86) International application number: PCT/CN2024/130837
(87) International publication number: WO 2025/236567

(57) **Abstract**

The present disclosure relates to the field of communications, and provides a low-noise full-band fiber amplifier and a signal transmission system. The low-noise full-band fiber amplifier comprises a first wavelength-division multiplexing component, a wavelength combining component, a first gain module, and a second gain module. The first wavelength-division multiplexing component demultiplexes a full-band optical signal to generate a first half-band optical signal and a second half-band optical signal. The first gain module performs forward doped-fiber amplification and backward Raman amplification on the first half-band optical signal to obtain a first half-band gain signal; and the second gain module performs forward doped-fiber amplification and backward Raman amplification on the second half-band optical signal to obtain a second half-band gain signal. The wavelength combining component multiplexes the first half-band gain signal and the second half-band gain signal to obtain a full-band gain signal. In the present invention, the entire wavelength band is divided into two primary bands, and the two primary bands are amplified respectively to equalize insertion loss of sub-bands; and by introducing backward Raman amplification, the low-noise full-band fiber amplifier is realized, and the backward Raman amplification is used to facilitate subsequent signal demodulation.

## Description

### CROSS-REFERENCE OF RELATED APPLICATIONS

The present application claims priority to the following application: (1) Chinese Application No. 202410596052.3 filed with the Chinese Patent Office on May 14, 2024, entitled "LOW-NOISE FULL-BAND FIBER AMPLIFIER AND SIGNAL TRANSMISSION SYSTEM".

### TECHNICAL FIELD

The present disclosure relates to the field of communication technologies, and more particularly to a low-noise full-band fiber amplifier and a signal transmission system.

### BACKGROUND

Driven by the rapid advancement of emerging telecommunication services-including 5G, video on demand (VOD), virtual reality (VR), mobile Internet of Things (MIoT), data center interconnect (DCI) data communication, etc., the demand for expanded capacity in backbone transmission networks continuous to grow. In the imminent 400 Gbit/s single-wavelength backbone networking era, channel modulation baud rates will reach 130 Gbaud to satisfy system optical signal-to-noise ratio (OSNR) requirements, corresponding to a 150 GHz channel spacing. Supporting transmission across 80 separate channels necessitates a total 12 THz spectral bandwidth. Erbium-doped fiber amplifiers (EDFAs) cannot amplify the full 12 THz spectrum concurrently, so signal bands must be amplified discretely, one band at a time. The full amplification window spans 1524 nm to 1627 nm, a total 103 nm spectral range, which creates technical barriers to full-spectrum simultaneous signal amplification. To address rising bandwidth demands, single-wavelength transmission standards will advance to 800 Gbit/s and 1.2 Tbit/s, with channel spacing expanding to 200 GHz or greater. Accordingly, systems supporting 80 channels at 800 Gbit/s or 1.2 Tbit/s per wavelength require extension into the S-band. For large-scale networking deployments such as data centers, bandwidth requirements are even more stringent, mandating simultaneous amplification across all of the O-band, S-band, C-band, L-band, and U-band spectral windows.

Against this backdrop, overcoming the drawbacks of conventional amplification technology constitutes an urgent unmet technical need within the optical communications industry.

### SUMMARY

The technical problem addressed by the present disclosure is that the conventional amplification technology cannot achieve low-noise amplification for full-band optical signals.

The present disclosure employs the following technical solutions.

The present disclosure provides a low-noise full-band fiber amplifier, comprising a first wavelength-division multiplexing (WDM) component 1, a wavelength combining component 2, and at least two gain modules; the two gain modules are classified as a first gain module 31 and a second gain module 32 according to their respective connection positions;
the first gain module 31 is connected between a transmission port of the first wavelength-division multiplexing component 1 and a first input port of the wavelength combining component 2, and the second gain module 32 is connected between a reflection port of the first wavelength-division multiplexing component 1 and a second input port of the wavelength combining component 2; a common port of the first wavelength-division multiplexing component 1 functions as a signal input port of the amplifier, and an output port of the wavelength combining component 2 functions as a signal output port of the amplifier;
the first wavelength-division multiplexing component 1 is configured to demultiplex full-band light received via the signal input port to generate first half-band light and second half-band light;
the first gain module 31 is configured to apply forward doped-fiber amplification and backward Raman amplification to the first half-band light to produce a first amplified half-band signal; the second gain module 32 is configured to apply forward doped-fiber amplification and backward Raman amplification to the second half-band light to generate a second amplified half-band signal;
the wavelength combining component 2 is configured to wavelength-multiplex the first amplified half-band signal and the second amplified half-band signal to generate an amplified full-band signal.

In a preferred embodiment, the first gain module 31 comprises a first circulating component 311, a first Raman pump component 312, and a first amplification component 313;
a first port of the first circulating component 311 is connected to the first Raman pump component 312, a second port of the first circulating component 311 functions as an input port of the first gain module 31, a third port of the first circulating component 311 is connected to a signal input port of the first amplification component 313, and a signal output port of the first amplification component 313 functions as an output port of the first gain module 31;
the first circulating component 311 is configured to forward-propagate the first half-band light to the first amplification component 313, and the first amplification component 313 is configured to apply doped-fiber amplification to the first half-band light;
the first Raman pump component 312 is configured to output first Raman light that matches the first half-band light;
the first circulating component 311 is further configured to back-propagate the first Raman light to the transmission port of the first wavelength-division multiplexing component 1, so that the first wavelength-division multiplexing component 1 multiplexes the first Raman light and the second Raman light to generate full Raman light, and back-propagate the full Raman light to a remote transmission optical fiber (RTOF) 4 disposed at the signal input port, so that the full Raman light performs backward amplification on the full-band light propagating in the remote transmission optical fiber 4.

In a preferred embodiment, the first amplification component 313 comprises a first demultiplexing unit 3131, a first wavelength combining (WC) unit 3132, and multiple first amplification units 3133;
an input port of the first demultiplexing unit 3131 functions as a signal input port of the first amplification component 313;
one first amplification unit 3133 is connected between each output port of the first demultiplexing unit 3131 and the corresponding input port of the first wavelength combining unit 3132;
the first demultiplexing unit 3131 is configured to demultiplex the first half-band light to generate a plurality of sub-band light; the first amplification unit 3133 is configured to apply forward doped-fiber amplification to corresponding sub-band light to generate amplified sub-band signals, and the first wavelength combining unit 3132 is configured to wavelength-multiplex amplified sub-band signals to generate the first amplified half-band signal.

In a preferred embodiment where the fiber amplifier comprises N amplification units, the fiber amplifier further comprises a second wavelength-division multiplexing component 5, a first coupling component 6, and a first fiber pump component 7;
a common port of the second wavelength-division multiplexing component 5 is connected to a signal output port of the i-th amplification unit, a transmission port of the second wavelength-division multiplexing component 5 is coupled to a signal transmission path, and a reflection port of the second wavelength-division multiplexing component 5 is connected to a first input port of the first coupling component 6;
the first fiber pump component 7 is connected to a second input port of the first coupling component 6, and each output port of the first coupling component 6 is connected to a pump input port of the corresponding amplification unit;
the first fiber pump component 7 is configured to generate pump light;
the second wavelength-division multiplexing component 5 is configured to demultiplex the output light of the i-th amplification unit into signal light and residual pump light, so that the signal light continues to be propagated on the signal transmission path, and the residual pump light propagates to the first coupling component 6;
the first coupling component 6 is configured to couple the pump light and the residual pump light and transmit the combined light to the pump input port of the corresponding amplification unit, so as to redirect the residual pump light of the i-th amplification unit to the corresponding amplification unit for optical amplification; wherein the amplification unit is the first amplification unit 3133 and/or the second amplification unit 3233.

In a preferred embodiment, the first demultiplexing unit 3131 comprises a plurality of serially cascaded demultiplexers.

In a preferred embodiment where the full-band light spans 6 bands, the first demultiplexing unit 3131 comprises 2 serially cascaded demultiplexers, namely a first demultiplexer 31311 and a second demultiplexer 31312;
a first output port of the first demultiplexer 31311 is connected to an input port of the second demultiplexer 31312;
an input port of the first demultiplexer 31311 functions as an input port of the first demultiplexing unit 3131; a second output port of the first demultiplexer 31311, a first output port of the second demultiplexer 31312, and a second output port of the second demultiplexer 31312 function as the respective output ports of the first demultiplexing unit 3131;
the first demultiplexer 31311 is configured to demultiplex the first half-band light to generate first sub-band light and remaining band light, and the second demultiplexer 31312 is configured to demultiplex the remaining band light to generate second sub-band light and third sub-band light.

In a preferred embodiment, the first wavelength combining unit 3132 comprises a plurality of serially cascaded multiplexers.

In a preferred embodiment where the full-band light spans 6 bands, the first wavelength combining unit 3132 comprises 2 serially cascaded multiplexers, namely a first multiplexer 31321 and a second multiplexer 31322;
an output port of the first multiplexer 31321 is connected to a first input port of the second multiplexer 31322;
a first input port of the first multiplexer 31321, a second input port of the first multiplexer 31321, and a second input port of the second multiplexer 31322 serve as respective input ports of the first wavelength combining unit 3132; an output port of the second multiplexer 31322 functions as an output port of the first wavelength combining unit 3132;
the first multiplexer 31321 is configured to multiplex the first amplified sub-band signal and the second amplified sub-band signal to generate an amplified partial band signal, and the second multiplexer 31322 is configured to multiplex the amplified partial band signal with the third amplified sub-band signal to generate the first amplified half-band signal.

In a preferred embodiment, the full-band light comprises one or more bands selected from a group consisting of the O-band, E-band, S-band, C-band, L-band, and U-band.

In a preferred embodiment where the full-band light comprises the O-band, E-band, S-band, C-band, L-band, and U-band, the first half-band light convers the O-band, E-band, and S-band, and the second half-band light covers the C-band, L-band, and U-band.

Compared with the conventional technologies, the beneficial advantages of the present disclosure are as follows: the present invention divides the entire wavelength band (full wavelength light) into two primary wavelength bands, which are then amplified independently. This design balances insertion loss uniformly across all individual sub-bands; the system introduces Raman amplification and mixes distributed Raman amplification alongside doped-fiber amplification, enabling construction of a full-band fiber amplifier with low noise figure performance; backward Raman propagation is implemented, wherein Raman pump light propagates counter-directionally relative to the signal. This counter-propagation scheme facilitates subsequent signal demodulation.

### BRIEF DESCRIPTION OF THE DRAWINGS

To clearly illustrate the technical solutions of embodiments of the present disclosure or the prior art, a brief introduction will be given below to the accompanying drawings required for use in the embodiments of the present disclosure or prior arts. It is obvious that the drawings described below are only some embodiments of the present disclosure, and those skilled in the art can derive other drawings based on these drawings without creative effort.
FIG. 1 is a structural schematic view illustrating a first low-noise full-band fiber amplifier provided in an embodiment of the present disclosure;
FIG. 2 is a structural schematic view illustrating a second low-noise full-band fiber amplifier provided by an embodiment of the present disclosure;
FIG. 3 is a structural schematic view illustrating a third low-noise full-band fiber amplifier provided by an embodiment of the present disclosure;
FIG. 4 is a structural schematic view illustrating a fourth low-noise full-band fiber amplifier provided by an embodiment of the present disclosure;
FIG. 5 is a structural schematic view illustrating a fifth low-noise full-band fiber amplifier provided by an embodiment of the present disclosure;
FIG. 6 is a structural schematic view illustrating a sixth low-noise full-band fiber amplifier provided by an embodiment of the present disclosure;
FIG. 7 is a structural schematic view illustrating a seventh low-noise full-band fiber amplifier provided by an embodiment of the present disclosure;
FIG. 8 is a structural schematic view illustrating an eighth low-noise full-band fiber amplifier provided by an embodiment of the present disclosure;
FIG. 9 is a structural schematic view illustrating a ninth low-noise full-band fiber amplifier provided by an embodiment of the present disclosure;
FIG. 10 is a structural schematic view illustrating a tenth low-noise full-band fiber amplifier provided by an embodiment of the present disclosure;
FIG. 11 is a structural schematic view illustrating an eleventh low-noise full-band fiber amplifier provided by an embodiment of the present disclosure;
FIG. 12 is a structural schematic view illustrating a twelfth low-noise full-band fiber amplifier provided by an embodiment of the present disclosure;
FIG. 13 is a structural schematic view illustrating a thirteenth low-noise full-band fiber amplifier provided by an embodiment of the present disclosure;
FIG. 14 is a structural schematic view illustrating a first amplification unit of a low-noise full-band fiber amplifier provided in an embodiment of the present disclosure;
FIG. 15 is a structural schematic view illustrating the fourteenth low-noise full-band fiber amplifier provided by an embodiment of the present disclosure;
FIG. 16 is a structural schematic view illustrating a signal transmission system provided in an embodiment of the present disclosure.

Throughout all drawings, identical reference numerals are used to indicate the same elements or structures, where:
1 - first wavelength-division multiplexing component;
2 - wavelength combing component;
31 - first gain module;
311 - first circulating component;
312 - first Raman pump component;
313 - first amplification component;
3131 - first demultiplexing unit;
31311 - first demultiplexer;
31312 - second demultiplexer;
3132 - first wavelength combining unit;
31321 - first multiplexer;
31322 - second multiplexer;
3133 - first amplification unit;
31331 - S-band first amplification unit;
31332 - E-band first amplification unit;
31333 - O-band first amplification unit;
32 - second gain module;
321 - second circulating component;
322 - second Raman pump component;
323 - second amplification component;
3231 - second demultiplexing unit;
32311 - third demultiplexer;
32312 - fourth demultiplexer;
3232 - second wavelength combing unit;
32321 - third multiplexer;
32322 - fourth multiplexer;
3233 - second amplification unit;
32331 - C-band second amplification unit;
32332 - L-band second amplification unit;
32333 - U-band second amplification unit;
4 - remote transmission optical fiber;
5 - second wavelength-division multiplexing component;
6 - first coupling component;
7 - first fiber pump component;
8 - second fiber pump component;
9 - isolator;
10 - gain flattening filter;
11 - third wavelength-division multiplexing component;
12 - fourth wavelength-division multiplexing component;
131 - fiber optic amplification stage;
132 - optical switch;
133 - fifth wavelength-division multiplexing component;
134 - second coupling component;
135 - third fiber pump component;
136 - sixth wavelength-division multiplexing component;
137 - seventh wavelength-division multiplexing component;
138 - fourth fiber pump component.

### DETAILED DESCRIPTION

In order to further clarify the objectives, technical solution, and advantages of the present disclosure, a detailed description is provided in conjunction with the accompanying drawings and embodiments. It shall be understood that the specific embodiments described herein are merely intended to explain the present disclosure and shall not be construed as limiting the same.

In the description of the present disclosure, terms such as "inner", "outer", "vertical", "horizontal", "upper", "lower", "top", and "bottom" refer to orientation or positional relationships based on the orientation or positional relationships shown in the accompanying drawings, which are used merely for convenience of description and do not require the present disclosure to be constructed and operated in a specific orientation. Accordingly, such terms shall not be interpreted as limitation of the present disclosure.

In the description of the present disclosure, terms such as "first" and "second" are only used for descriptive purposes and shall not be interpreted as indicating relative importance or implicitly indicating the quantity of technical features. Therefore, the features defined by "first" or "second" may explicitly or implicitly comprise at least one of these features. In the description of the present disclosure, "a plurality of" means two or more, unless otherwise explicitly limited.

In the present application, unless otherwise specified and limited, the term "connected" shall be interpreted broadly; for example, it may mean fixed connection, detachable connection, or integral connection; it may mean direct connection or indirect connection via an intermediate medium. In addition, the term "coupled" may refer to a connection configured to establish electrical signal transmission, or form an optical signal transmission pathway.

In addition, the technical features disclosed in each embodiment below can be combined with one another where no conflict exists.

### Embodiment 1

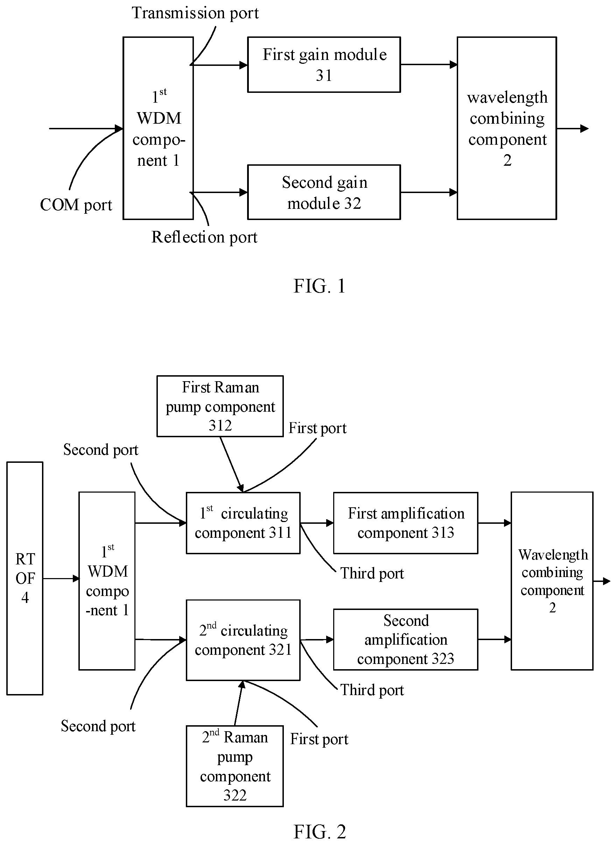

Embodiment 1 of the present disclosure provides a low-noise full-band fiber amplifier, as shown in Fig. 1, comprising a first wavelength-division multiplexing component 1, a wavelength combining component 2, a first gain module 31, and a second gain module 32. In practical application scenarios, the first wavelength-division multiplexing component 1 and the wavelength combining component 2 each take the form of a wavelength division multiplexing device.

The first gain module 31 is connected between a transmission port of the first wavelength-division multiplexing component 1 and a first input port of the wavelength combining component 2. The second gain module 32 is connected between a reflection port of the first wavelength-division multiplexing component 1 and a second input port of the wavelength combining component 2. A common port of the first wavelength-division multiplexing component 1 functions as a signal input port, and an output port of the wavelength combining component 2 functions as a signal output port.

The first wavelength-division multiplexing component 1 is configured to demultiplex full-band light input via the signal input port to generate first half-band light and second half-band light. The first half-band light and the second half-band light each contain an equal quantity of bands, which divides the full complete band (full-band light) into two primary segments (first half-band light and second half-band light) for independent amplification, so insertion loss across every sub-band remains uniform.

The full-band light comprises one or more bands selected from the group consisting of the O-band, E-band, S-band, C-band, L-band, and U-band. In an optional implementation covering all six bands, the full-band light comprises O-band, E-band, S-band, C-band, L-band, and U-band; the first half-band light covers the O-band, E-band, and S-band, and the second half-band light covers the C-band, L-band, and U-band.

The first gain module 31 is configured to apply forward doped-fiber amplification and backward Raman amplification to the first half-band light to generate a first amplified half-band signal. The second gain module 32 is configured to apply forward doped-fiber amplification and backward Raman amplification to the second half-band light to generate a second amplified half-band signal. The doped-fiber amplification refers to optical amplification realized via doped fiber amplifiers. The type of doped fiber amplifier is selected by analysis of those skilled in the art based on the wavelength band of the light to be amplified. In practical deployment, the doped fiber amplifier may be an erbium-doped fiber amplifier or bismuth-doped fiber amplifier.

The wavelength combining component 2 is configured to wavelength-multiplex the first amplified half-band signal and the second amplified half-band signal to generate an amplified full-band signal.

Conventional full-band amplifiers suffer relatively high noise figure because each sub-band in the full-band communication system employs distinct doped fiber gain media and abundant multiplexing/demultiplexing components. In order to effectively reduce the noise figure of the full-band amplifier, the present embodiment mixes distributed Raman fiber amplifiers and doped fiber amplifiers to achieve a low-noise full-band fiber amplifier. However, due to the fact that the band of the full-band amplifier is rather wide, the Raman pump wavelength (i.e. Raman light) overlaps with the sub-band signal band. If Raman light is directly combined with the sub-band signal for forward amplification, the Raman light and signal light will become indistinguishable after mixing, which creates obstacles to downstream wavelength demultiplexing operations. To solve this problem, this embodiment adopts counter-propagating backward Raman amplification, where Raman light travels opposite to the signal.

In order to ensure backward Raman amplification does not interfere with normal signal transmission, the present embodiment further provides an optional implementation, as shown in Fig. 2. The first gain module 31 comprises a first circulating component 311, a first Raman pump component 312, and a first amplification component 313. A first port of the first circulating component 311 is connected to the first Raman pump component 312. A second port of the first circulating component 311 functions as the input port of the first gain module 31. A third port of the first circulating component 311 is connected to a signal input port of the first amplification component 313, and the signal output port of the first amplification component 313 functions as the output port of the first gain module 31. The first circulating component 311 is configured to forward propagate the first half-band light to the first amplification component 313. The first amplification component 313 is configured to perform doped-fiber amplification on the first half-band light. The first Raman pump component 312 is configured to output first Raman light that matches the first half-band light. The first circulating component 311 is further configured to back-propagate the first Raman light to the transmission port of the first wavelength-division multiplexing component 1, so that the first wavelength-division multiplexing component 1 multiplexes the first Raman light and the second Raman light to generate full Raman light, and back-propagate the full Raman light to the remote transmission optical fiber 4 disposed at the signal input port to perform backward Raman amplification on the full Raman light within the remote transmission optical fiber 4. The second Raman light is generated by the second gain module 32 and back-propagated to the second output port of the wavelength-division multiplexing component.

The second gain module 32 shares an identical concept with the first gain module 31; that is, the second gain module 32 comprises a second circulating component 321, a second Raman pump component 322, and a second amplification component 323.

A first port of the second circulating component 321 is connected to the second Raman pump component 322. A second port of the second circulating component 321 functions as the input port of the second gain module 32. A third port of the second circulating component 321 is connected to a signal input port of the second amplification component 323. The signal output port of the second amplification component 323 functions as the output port of the second gain module 32.

The second circulating component 321 is configured to forward propagate the second half-band light to the second amplification component 323, and the second amplification component 323 is configured to perform doped-fiber amplification on the second half-band light.

The second Raman pump component 322 is configured to output second Raman light that matches the second half-band light. The second circulating component 321 is further configured to back-propagate the second Raman light to the reflection port of the first wavelength-division multiplexing component 1.

In practical use, the first circulating component 311 and the second circulating component 321 each adopt a circulator device; that is, the first circulating component 311 is a circulator, and the second circulating component 321 is a circulator too. The first port, second port, and third port of the circulating component are all described based on the knowledge of those skilled in the art; that is, the deflection direction of the circulating component is a direction to deflect the light input to the first port to the light output from the second port, deflect the light input to the second port to the light output from the third port, and deflect the light input to the third port to the light output from the first port.

When the first half-band light covers the O-band, E-band, and S-band, the first Raman light comprises light with wavelengths of 10xxnm, 12xxnm, 13xxnm, and 14xxnm. When the second half-band light covers the C-band, L-band, and U-band, the second Raman light comprises light with a wavelength of 15xxnm.

The first wavelength-division multiplexing component 1 not only demultiplexes the forward-propagating full-band light, but also simultaneously multiplexes the back-propagating first Raman light and second Raman light. In the remote transmission optical fiber 4, the first Raman light is actually still used for Raman amplification of the first half-band light in the full-band light, and the second Raman light is actually still used for Raman amplification of the second half-band light in the full-band light.

It should be understood that during real transmission, the backward Raman amplification partially amplifies the signal before it is actually transmitted to the signal input port. After passing through the first amplification component 313 and the second amplification component 323, the signal with partial gain is further amplified. For descriptive simplicity, the present embodiment still describes each amplification process based on unamplified incoming full-band light.

The present embodiment integrates all sub-band Raman pump wavelengths into unified Raman assemblies as much as possible, and couples the Raman pump wavelengths into the optical path via a circulator. Reverse-propagating Raman light does not interfere with the forward signal amplification, greatly facilitating downstream signal demodulation.

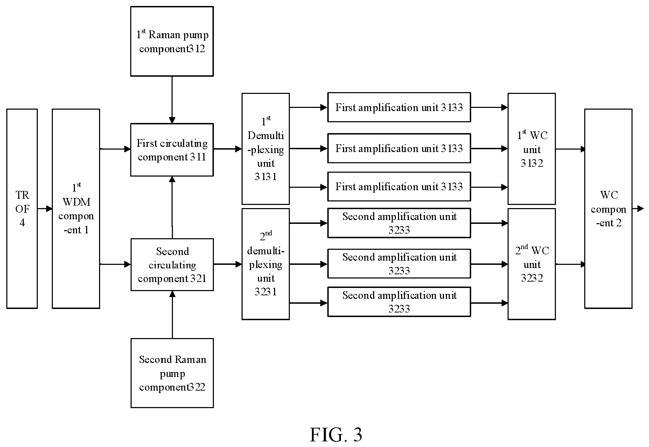

In practical application scenarios, as shown in Fig. 3, the first amplification component 313 comprises a first demultiplexing unit 3131, a first wavelength combining unit 3132, and a plurality of first amplification units 3133. The input port of the first demultiplexing unit 3131 functions as the signal input port of the first amplification component 313, and the output port of the first wavelength combining unit 3132 functions as the signal output port of the first amplification component 313. One first amplification unit 3133 is connected between each output port of the first demultiplexing unit 3131 and the corresponding input port of the first wavelength combining unit 3132. The first demultiplexing unit 3131 is configured to demultiplex the first half-band light to generate a plurality of sub-band light. The first amplification unit 3133 is configured to apply forward doped-fiber amplification to corresponding sub-band light to generate amplified sub-band signals, and the first wavelength combining unit 3132 is configured to multiplex multiple amplified sub-band signals to form the first amplified half-band signal.

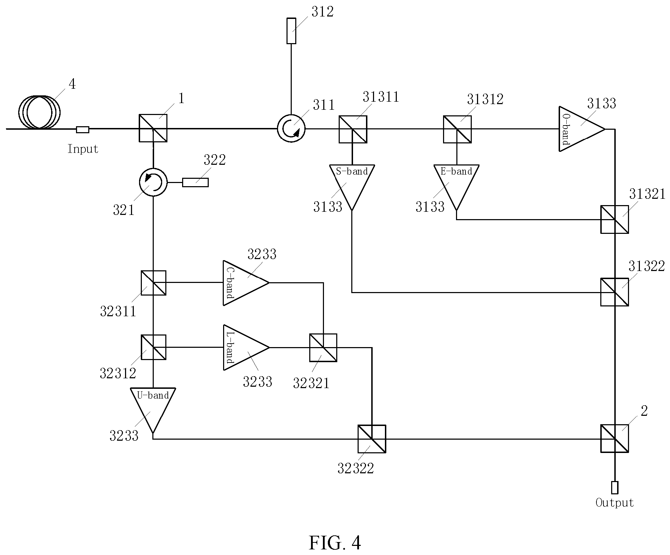

In practical use, the first demultiplexing unit 3131 may be a one-to-many wavelength division multiplexer, and there is also an implementation where the first demultiplexing unit 3131 comprises a plurality of serially cascaded demultiplexers. As shown in Fig. 4 where the full-band light comprises 6 bands of light, the first demultiplexing unit 3131 comprises 2 serially cascaded demultiplexers: a first demultiplexer 31311 and a second demultiplexer 31312. A first output port of the first demultiplexer 31311 is connected to an input port of the second demultiplexer 31312. An input port of the first demultiplexer 31311 functions as the input port of the first demultiplexing unit 3131. A second output port of the first demultiplexer 31311, a first output port of the second demultiplexer 31312, and a second output port of the second demultiplexer 31312 function as the respective output ports of the first demultiplexing unit 3131. The first demultiplexer 31311 is configured to demultiplex the first half-band light to generate the first sub-band light and residual band light, and the second demultiplexer 31312 is configured to demultiplex the residual band light to generate second sub-band light and third sub-band light.

In practical use, the first wavelength combining unit 3132 may be a many-to-one wavelength division multiplexer, and there is also an implementation where the first wavelength combining unit 3132 comprises a plurality of serially cascaded multiplexers. As shown in Fig. 4, when the full-band light comprises 6 bands of light, the first wavelength combining unit 3132 comprises 2 serially cascaded multiplexers, namely a first multiplexer 31321 and a second multiplexer 31322. An output port of the first multiplexer 31321 is connected to a first input port of the second multiplexer 31322. A first input port of the first multiplexer 31321, a second input port of the first multiplexer 31321, and a second input port of the second multiplexer 31322 are respectively used as the input ports of the first wavelength combining unit 3132. An output port of the second multiplexer 31322 functions as the output port of the first wavelength combining unit 3132. The first multiplexer 31321 is configured to combine the first amplified sub-band signal and the second amplified sub-band signal to generate an amplified partial band signal, and the second multiplexer 31322 is configured to combine the amplified partial band signal with the third amplified sub-band signal to generate the first amplified half-band signal.

That is, when the full-band light comprises 6 bands of light, the number of output ports of the first demultiplexing unit 3131 in the first amplification component 313 is 3; the number of first amplification units 3133 in the first amplification component 313 is 3; and the number of input ports of the first wavelength combining unit 3132 in the first amplification component 313 is 3. One first amplification unit 3133 is connected between the output port of each first demultiplexing unit 3131 and the corresponding input port of the first wavelength combining unit 3132.

The structure of the second amplification component 323 is implemented based on the same concept as that of the first amplification component 313. In an optional implementation, as shown in Fig. 4, the second amplification component 323 comprises a second demultiplexing unit 3231, a second wavelength combining unit 3232, and a plurality of second amplification units 3233. Here, the second demultiplexing unit 3231 comprises a third demultiplexer 32311 and a fourth demultiplexer 32312 serially cascaded with each other, and the second wavelength combining unit 3232 comprises a third multiplexer 32321 and a fourth multiplexer 32322 serially cascaded with each other.

The input port of the third demultiplexer 32311 is connected to the third port of the second circulating component 321. The first output port of the third demultiplexer 32311 is connected to the input port of the fourth demultiplexer 32312. The second output port of the third demultiplexer 32311, the first output port of the fourth demultiplexer 32312, and the second output port of the fourth demultiplexer 32312 are respectively connected to the signal input port of a second amplification unit 3233. The signal output ports of each second amplification unit 3233 are respectively connected to the first input port of the third multiplexer 32321, the second input port of the third multiplexer 32321, and the first input port of the fourth multiplexer 32322. Each second amplification unit 3233 is configured to amplify the fourth sub-band light, the fifth sub-band light, and the sixth sub-band light, respectively. The output port of the third multiplexer 32321 is connected to the second input port of the fourth multiplexer 32322, and the output port of the fourth multiplexer 32322 is connected to the second input port of the wavelength combing component 2.

The first sub-band light, second sub-band light, third sub-band light, fourth sub-band light, fifth sub-band light, and sixth sub-band light are all single band light. For example, the first sub-band light is S-band light; the second sub-band light is O-band light; the third sub-band light is E-band light; the fourth sub-band light is C-band light; the fifth sub-band light is L-band light; and the sixth sub-band light is U-band light.

The first demultiplexer 31311, second demultiplexer 31312, third demultiplexer 32311, fourth demultiplexer 32312, first multiplexer 31321, second multiplexer 31322, third multiplexer 32321, and fourth multiplexer 32322 each may take a form of wavelength division multiplexing devices in practical use. The first amplification unit 3133 and the second amplification unit 3233 may be corresponding doped fiber amplifiers, such as erbium-doped fiber amplifiers (EDFA) or bismuth-doped fiber amplifiers. For the first amplification unit 3133 and the second amplification unit 3233 connected at different positions, the corresponding doped elements may also be different. The specific doped elements are determined by analysis of those skilled in the art based on the wavelength requirements of the light to be amplified on the path.

It should be noted that for doped fiber amplifiers, corresponding pump light inputs are also required for optical amplification, that is, the first amplification unit 3133 and the second amplification unit 3233 are both connected to corresponding pump inputs. For the sake of clarity in the accompanying drawings, Figs. 1-5 are presented with the pump inputs of the first amplification unit 3133 and the second amplification unit 3233 hidden.

### Embodiment 2

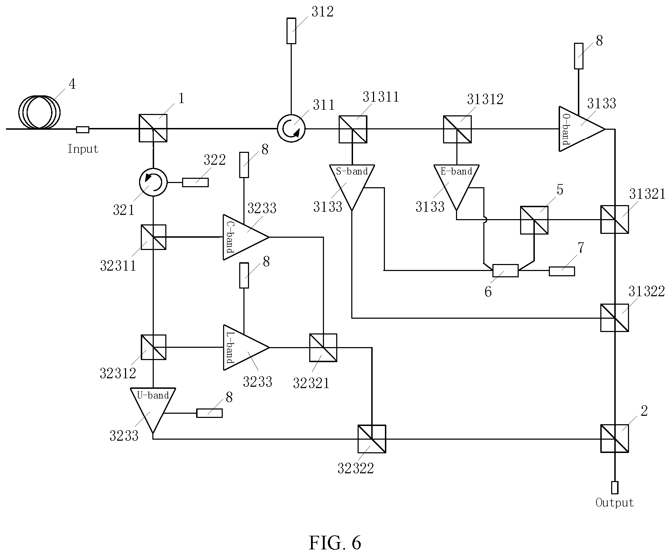

Based on Embodiment 1, the present embodiment employs erbium-doped fiber amplifiers as the first amplification unit 3133 and the second amplification unit 3233. In addition, in order to ensure normal signal transmission, isolators 9 or gain flattening filters 10 may be installed at the signal input ports of each first amplification unit 3133 and each second amplification unit 3233. However, in practical use, when higher output power is required, higher power pump light needs to be input to the erbium-doped fiber amplifier. However, when high-power pump lasers are employed, an inherent technical challenge arises: under certain optical path architectures, individual fiber amplification stages generate substantial residual pump light (exceeding 20 mW). If the residual pump light is too high and not treated specially, following problems will occur in a case the residual pump light is directly input to subsequent devices such as isolator 9 or isolator 9 plus gain flattening filter 10: due to the short wavelength of the pump light (such as 980nm), its photon energy is relatively high, and the temperature of the device will rise due to its local absorption, affecting the performance of the device. Especially when working under high temperature conditions, residual pump light can cause the local temperature of isolator 9 to be particularly high, and long term operation under these conditions can lead to device failure and shortened lifespan, affecting the reliability of EDFA's high-power output at high-temperatures. To address this issue, the present embodiment provides the following preferred implementation architectures, comprising:
when the fiber amplifier contains N amplification units, as shown in Fig. 6, the fiber amplifier further comprises a second wavelength-division multiplexing component 5, a first coupling component 6, and a first fiber pump component 7.

The common port of the second wavelength-division multiplexing component 5 is connected to the signal output port of the i-th amplification unit, the transmission port of the second wavelength-division multiplexing component 5 is coupled to the signal transmission path, and the reflection port of the second wavelength-division multiplexing component 5 is connected to the first input port of the first coupling component 6. Specifically, when the second wavelength-division multiplexing component 5 is not connected to the signal transmission path, the signal light is transmitted on the original signal transmission path of the second wavelength-division multiplexing component 5.

The first fiber pump component 7 is connected to the second input port of the first coupling component 6, and each output port of the first coupling component 6 is connected to the pump input port of the corresponding amplification unit; the corresponding amplification unit may be any one or more amplification units (the i-th amplification unit may be included).

The first fiber pump component 7 is configured to generate pump light; the second wavelength-division multiplexing component 5 is configured to demultiplex the output light from the i-th amplification unit to separate signal light and residual pump light, so that the signal light continues forward transmission on the signal transmission path, and the residual pump light is routed into the first coupling component 6. The residual pump light may be understood as the remaining pump light when the i-th amplification unit amplifies the signal using pump light.

The first coupling component 6 is configured to couple the pump light and the residual pump light, then transmits the combined pump light to the pump input port of the corresponding amplification unit, so as to guide the residual pump light from the i-th amplification unit to the corresponding amplification unit for optical amplification. The amplification units are the first amplification unit 3133 and/or the second amplification unit 3233. As shown in Fig. 6, there are three first amplification units 3133 and three second amplification units 3233, so N is 6. I is a positive integer, and is less than or equal to N. N can be understood as the total number of the first amplification units 3133 and the second amplification units 3233 and the specific value of i can be determined by analysis of technical personnel in this field based on requirements.

The amplification unit whose corresponding pump input port is not connected to the first coupling component 6 can directly use the second fiber pump component 8 for pump light supply; that is, the pump input port of the amplification unit is connected to the second fiber pump component 8.

This embodiment can be understood as that each first amplification unit 3133 and each second amplification unit 3233 function as amplification units. The second wavelength-division multiplexing component 5 is connected to the signal output ports of any one or more amplification units, and the first coupling component 6 and the first fiber pump component 7 are connected in the manner as described above. The output ports of the first coupling component 6 each are connected to the pump input ports of the corresponding one or more amplification units, so that the residual pump light from the corresponding amplification unit is separated by the second wavelength-division multiplexing component 5 and transmitted to the amplification unit via the first coupling component 6, achieving the reuse of the residual pump light and effectively improving the noise coefficient and output power of the amplification unit. The output port of the first coupling component 6 can also be connected to the pump input port of the i-th amplification unit, allowing its own residual pump light to flow back to itself for reuse. The splitting ratio of the first coupling component 6 is obtained by analysis of a person skilled in the art based on requirements.

It should be noted here that the above embodiment is described on the premise that the i-th amplification unit employs a forward pump configuration. In the forward pump configuration, the residual pump light propagates together with the amplified signal light; that is, both light components output from the signal output port of the i-th amplification unit.

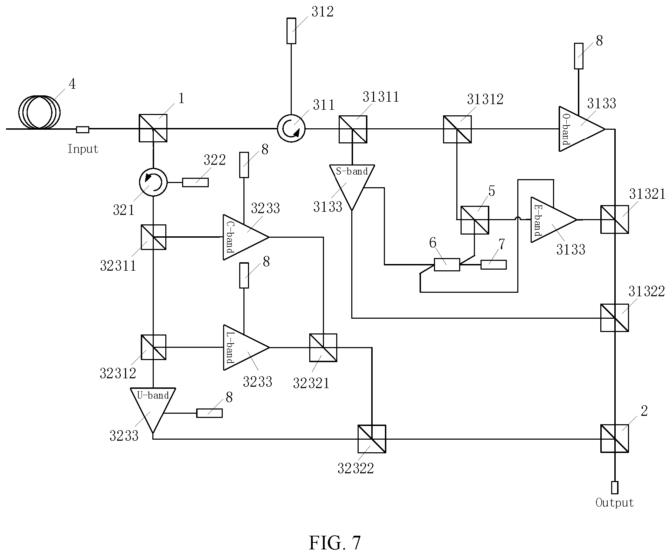

When the i-th amplification unit employs a backward pump configuration, the transmission direction of the residual pump light is opposite to that of the signal light. At this time, the common port of the second wavelength-division multiplexing component 5 is connected to the signal input port of the i-th amplification unit, the transmission port thereof is coupled to the signal transmission path, and the reflection port thereof is connected to the first input port of the first coupling component 6; the first fiber pump component 7 is connected to the second input port of the first coupling component 6, and each output port of the first coupling component 6 is connected to the pump input port of the corresponding amplification unit, as shown in Fig. 7.

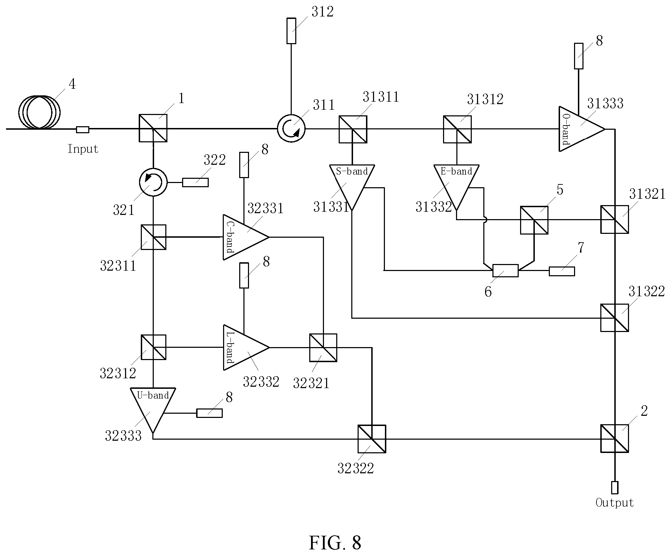

Fig. 6 is an example of the i-th amplification unit using a forward pump configuration. In order to clearly illustrate each amplification unit, in this embodiment, the three first amplification units 3133 in Fig. 6 are hereinafter referred to as the S-band first amplification unit 31331, E-band first amplification unit 31332, and O-band first amplification unit 31333, respectively, and the three second amplification units 3233 are referred to as the C-band second amplification unit 32331, L-band second amplification unit 32332 and U-band second amplification unit 32333. These six amplification units form a schematic configuration as shown in Fig. 8, and are arranged in the sequential order of the S-band first amplification unit 31331, the E-band first amplification unit 31332, the O-band first amplification unit 31333, the C-band second amplification unit 32331, the L-band second amplification unit 32332, and the U-band second amplification unit 32333. For example, if i is equal to 2, the signal output port of the second amplification unit (i.e., the E-band first amplification unit 31332) is connected to the common port of the second wavelength-division multiplexing component 5, and a 2 * 2 coupler is used as the first coupling component 6. The two output ports of the first coupling component 6 are respectively connected to the pump input ports of the S-band first amplification unit 31331 and the E-band first amplification unit 31332.

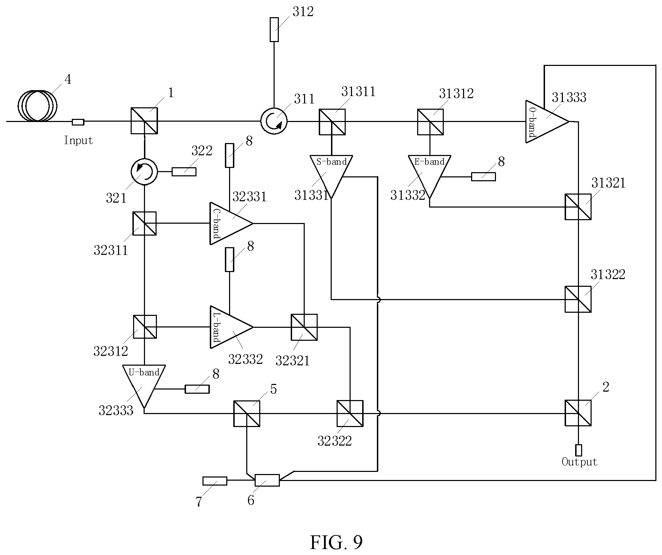

It should be noted that Figs. 6 and 8 are only examples and do not mean that the common port of the second wavelength-division multiplexing component 5 must be connected to the signal output port of the E-band first amplification unit 31332, or that the output port of the first coupling component 6 must be connected to the pump input port of the S-band first amplification unit 31331 and the pump input port of the E-band first amplification unit 31332. In other application scenarios, further as shown in Fig. 9, the common port of the second wavelength-division multiplexing component 5 is connected to the signal output port of the U-band second amplification unit 32333, and the two output ports of the first coupling component 6 are respectively connected to the pump input ports of the S-band first amplification unit 31331 and the O-band first amplification unit 31333.

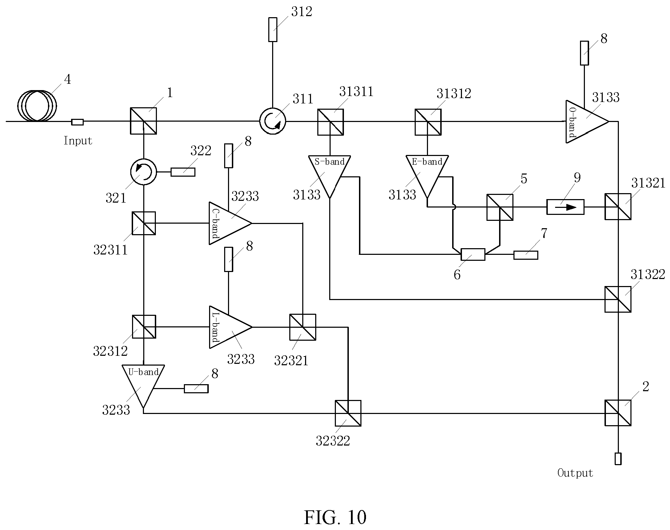

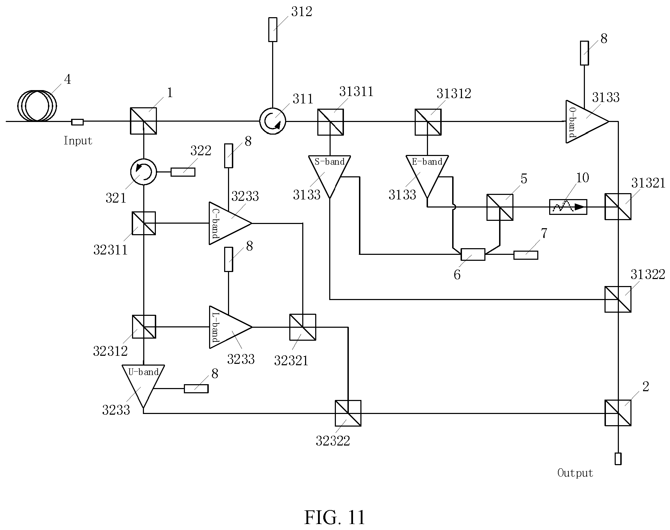

In practical use, an isolator 9 or a gain flattening filter 10 may further be connected to the signal transmission path where the signal output port of the corresponding amplification unit is located. Specifically, the isolator 9 or gain flattening filter 10 is connected to the transmission port of the second wavelength-division multiplexing component 5; that is, the transmission port of the second wavelength-division multiplexing component 5 is also connected to the isolator 9 or gain flattening filter 10, as shown in Figs. 10 and 11.

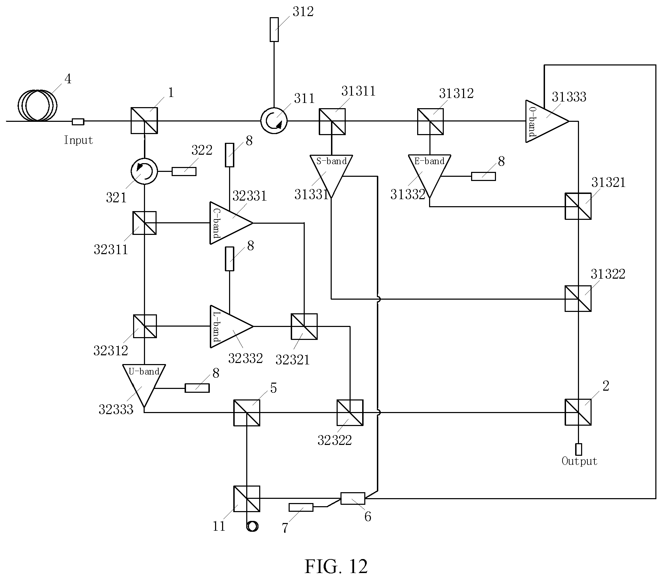

In a preferred embodiment, as shown in Fig. 12, the amplifier further comprises a third wavelength-division multiplexing component 11. The common port of the third wavelength-division multiplexing component 11 is connected to the reflection port of the second wavelength-division multiplexing component 5. The reflection port of the third wavelength-division multiplexing component 11 is connected to the first input port of the first coupling component 6. The transmission port of the third wavelength-division multiplexing component 11 is unused and subjected to anti-reflection treatment, such as knotting around a small circle, to improve the isolation of signal light (also known as signal wavelength light).

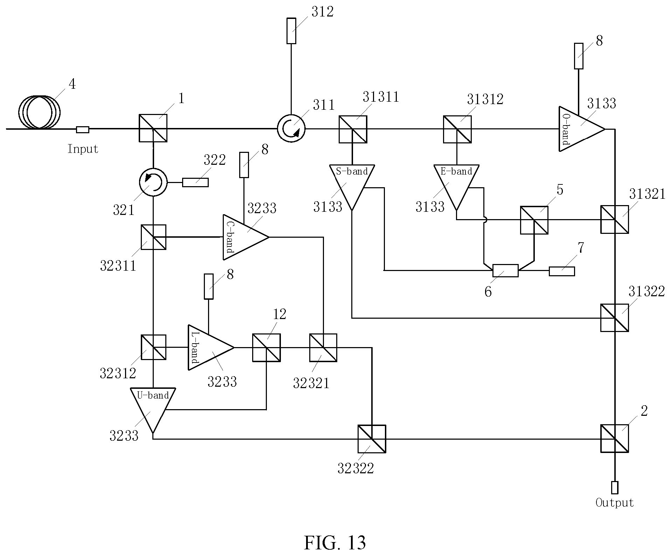

In other embodiments, the common port of a fourth wavelength-division multiplexing component 12 may also be connected to the signal output port of the corresponding amplification unit. The transmission port of the fourth wavelength-division multiplexing component 12 is coupled to the signal transmission path, and the reflection port of the fourth wavelength-division multiplexing component 12 is connected to the corresponding amplification unit, as shown in Fig. 13, so as to transmit the residual pump light from a given amplification unit to the corresponding amplification unit for reuse.

In practical use, when higher optical power is required for the signal of the corresponding frequency band, it can also be achieved by cascading a plurality of doped fiber amplifiers in sequence. The pump light supply architecture in the above embodiments can also be used among the plurality of doped fiber amplifiers. Therefore, by conceiving the above embodiments comprehensively, three different pump light supply architectures can be obtained:

The first architecture is to directly connect the pump laser to the pump input port of the corresponding doped fiber amplifier, providing pump light for the doped fiber amplifier.

The second architecture is to connect a wavelength-division multiplexing component to the signal output port of the doped fiber amplifier, and the reflection port of the wavelength-division multiplexing component is connected to the pump input port of the corresponding doped fiber amplifier, so as to use residual pump light to provide pump light for the doped fiber amplifier.

The third architecture is to connect a wavelength-division multiplexing component to the signal output port of the doped fiber amplifier and the reflection port thereof to the first input port of the coupling component, and connect the second input port of the coupling component to the pump laser and the output port thereof to the pump input port of the corresponding doped fiber amplifier, whereby the residual pump light and the output of the pump laser together jointly provide pump light for the doped fiber amplifier.

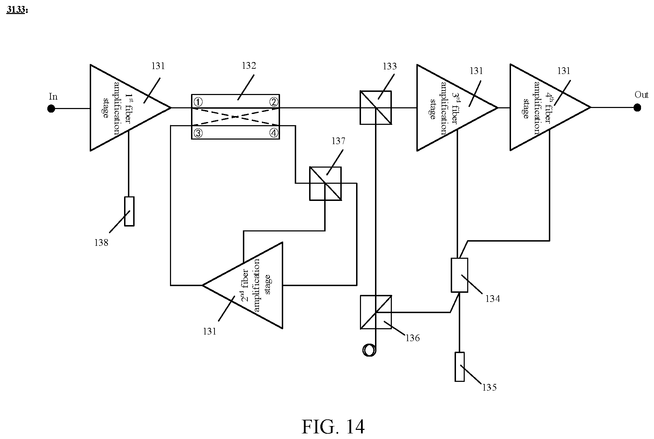

The above three supply architectures may be simultaneously applied to the same amplification unit. Take an example in which any one of the first amplification units 3133 is realized by cascading a plurality of doped fiber amplifiers in sequence, the structure of the first amplification unit 3133 is as shown in Fig. 14, and the first amplification unit 3133 comprises M-serially cascaded fiber amplification stages 131. Each level of fiber amplification stage 131 is a doped fiber amplifier, and in an optional implementation, the first amplification unit 3133 further comprises an optical switch 132, a fifth wavelength-division multiplexing component 133, a second coupling component 134, a third fiber pump component 135, a sixth wavelength-division multiplexing component 136, and a seventh wavelength-division multiplexing component 137 and a fourth fiber pump component 138.

The signal output port of the (k-1)-th fiber amplification stage 131 is connected to a first port of the optical switch 132. A second port of the optical switch 132 is connected to the common port of the fifth wavelength-division multiplexing component 133. A transmission port of the fifth wavelength-division multiplexing component 133 is connected to a signal input port of the (k+1)-th fiber amplification stage 131. A reflection port of the fifth wavelength-division multiplexing component 133 is connected to the first input port of the second coupling component 134. A second input port of the second coupling component 134 is connected to the third fiber pump component 135, and an output port of the second coupling component 134 is connected to the corresponding erbium fiber amplification stage. As shown in Fig. 14, the two output ports of the second coupling component 134 are respectively connected to the third erbium fiber amplification stage and the fourth erbium fiber amplification stage.

Here, a sixth wavelength-division multiplexing component 136 is further connected between the fifth wavelength-division multiplexing component 133 and the second coupling component 134. Specifically, the common port of the sixth wavelength-division multiplexing component 136 is connected to the reflection port of the fifth wavelength-division multiplexing component 133, and the reflection port of the sixth wavelength-division multiplexing component 136 is connected to the first input port of the second coupling component 134. The transmission port of the sixth wavelength-division multiplexing component 136 is unused and subjected to anti-reflection treatment, such as knotting around a small circle, to improve the isolation of signal light (also known as signal wavelength light).

A third port of the optical switch 132 is connected to the common port of the seventh wavelength-division multiplexing component 137. The transmission port of the seventh wavelength-division multiplexing component 137 is connected to the signal input port of the k-th optical fiber amplification stage 131, and the fourth port of the optical switch 132 is connected to the signal output port of the k-th optical fiber amplification stage 131.

The remaining fiber amplification stages 131 (including the first k-1 fiber amplification stages 131 and those fiber amplification stages 131 that are not connected to an output port of the second coupling component 134) receive pump light from the fourth fiber pump component 138.

As shown in Fig. 14, M is 4 and k is 2. When the optical switch 132 is set to couple the first port to the second port, only three fiber amplification stages 131 are employed in the optical path in Fig. 14, namely the first fiber amplification stage 131, the third fiber amplification stage 131, and the fourth fiber amplification stage 131. The fifth wavelength-division multiplexing component 133 is configured to separate the residual pump light from the first fiber amplification stage 131, and transmit the residual pump light from the first fiber amplification stage 131 to the third fiber amplification stage 131 and the fourth fiber amplification stage 131 via the second coupling component 134. When the optical switch 132 is set to establish an optical path between the first port and the fourth port, and between the second port and the third port, four fiber amplification stages 131 in Fig. 14, namely the first fiber amplification stage 131, the second fiber amplification stage 131, the third fiber amplification stage 131, and the fourth fiber amplification stage 131, are present in the optical path. The seventh wavelength-division multiplexing component 137 is configured to separate the residual pump light of the first fiber amplification stage 131 for use in the second fiber amplification stage 131, and the fifth wavelength-division multiplexing component 133 is configured to separate the residual pump light from the second fiber amplification stage 131, and to transmit the residual pump light from the second fiber amplification stage 131 to the third optical fiber amplification stage 131 and the fourth optical fiber amplification stage 131 for use via the coupling component 134. Here, K is less than N and greater than or equal to 2.

### Embodiment 3

The present disclosure builds on the amplifier described in Embodiment 1 and describes, combined with specific application scenarios, the implementation process of the characteristic scenarios of the present disclosure through technical expressions in relevant scenarios.

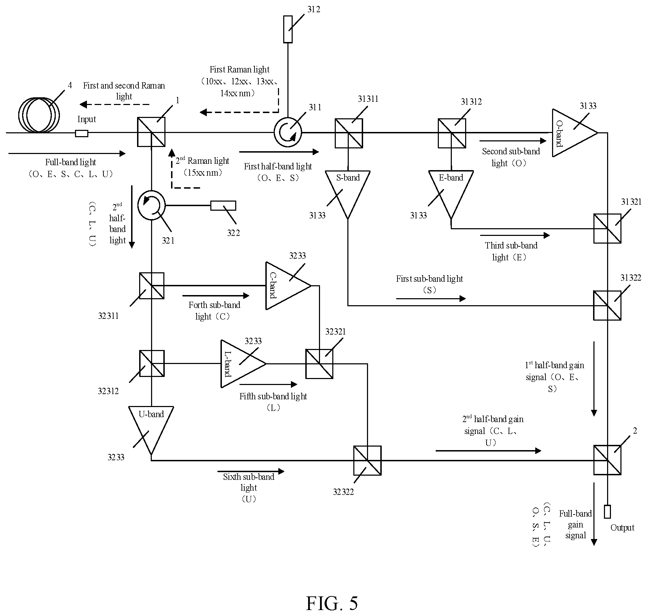

The present embodiment takes a scenario in which a full band light containing the O-band, E-band, S-band, C-band, L-band, and U-band requires to be amplified as an example. This embodiment provides a low-noise full band fiber amplifier, as shown in Fig. 5, which comprises a remote transmission optical fiber 4, a first wavelength-division multiplexing component 1 (in practical application scenarios, a wavelength division multiplexer) that splits the full band at its mid-point, and a first circulating component 311 (in practical application scenarios, a circulator) with a center wavelength of 13xx band, which are sequentially connected. The first circulating component 311 couples Raman pump light of 10xx, 12xx, 13xx, and 14xx that overlaps with short sub wavelengths together. The common port (port 2, i.e., the second port) of the first circulating component 311 is connected to the reflection or transmission port of the first wavelength-division multiplexing component 1, and its port 1 (i.e. the first port) is connected to 10xx, 12xx, 13xx, and 14xx Raman pump source (i.e., the first Raman pump component 312 in Embodiment 1), and its port 3 (i.e., the third port) is connected to the common port of the first demultiplexer 31311. The first demultiplexer 31311 is configured to separate the S-band amplifier from the O+E-band amplifier (in fact, it separates the light in the S-band from the light in the O+E-band, and the separated light enters the corresponding amplifier). The reflection or transmission port of the first demultiplexer 31311 is optically coupled to the S-band amplifier, while the other port is connected to the common port of the second demultiplexer 31312. The second demultiplexer 31312 is configured to separate the O-band amplifier from the E-band amplifier, and the reflection or transmission port of the second demultiplexer 31312 is optically coupled to the O-band amplifier, then the other port is connected to the E-band amplifier. The signal amplified by the O-band amplifier and the signal amplified by the E-band amplifier are multiplexed by the first multiplexer 31321 to form an O+E-band amplifier. The signal amplified by the S-band amplifier and the O+E-band signal combined by the first multiplexer 31321 are multiplexed by the second multiplexer 31322 to form an S+O+E-band amplifier.

The long-wavelength port of the first wavelength-division multiplexing component 1 - which splits the full band at its mid-point - is connected to the second circulating component 321. The center wavelength of the second circulating component 321 is in the 1550nm band. The common port (Port 2, i.e., the second port) of the second circulating component 321 is connected to the other port of the first wavelength-division multiplexing component 1. Port 1 (the first port) of the second circulating component 321 is connected to a 15xx Raman pump source (i.e., the second Raman pump component 322 in Embodiment 1). Port 3 (the third port) of the second circulating component 321 is connected to the common port of the third demultiplexer 32311, and the third demultiplexer 32311 is configured to separate the C-band amplifier from the L+U-band amplifier. The reflection or transmission port of the third demultiplexer 32311 is optically coupled to the C-band amplifier, then the other port is connected to the common port of the second amplification unit 3233, and the second amplification unit 3233 is configured to separate the L-band amplifier from the U-band amplifier. The reflection or transmission port of the second amplification unit 3233 feeds into the L-band amplifier, while the other port is connected to the U-band amplifier. The signal amplified by the C-band amplifier and the signal amplified by the L-band amplifier are multiplexed by the third multiplexer 32321 to form a C+L band amplifier. The signal amplified by the U-band amplifier is multiplexed with the signal in the C+L band after being multiplexed by the third multiplexer 32321, and then multiplexed by the fourth multiplexer 32322 to form a C+L+U-band amplifier. The S+O+E-band amplifier and the C+L+U-band amplifier are combined by the wavelength combining component 2 to form an O+E+S+C+L+U full-band fiber amplifier.

In practical application scenarios, the wavelength combining component 2, the first demultiplexer 31311, the second demultiplexer 31312, the third demultiplexer 32311, the fourth demultiplexer 32312, the first multiplexer 31321, the second multiplexer 31322, the third multiplexer 32321, and the fourth multiplexer 32322 are all wavelength division multiplexing devices.

Because each sub-band within a full-band communication system employs different doped-fiber gain media and numerous multiplexing-demulitplexing devices, the full-band amplifier suffers a relatively high noise figure. To effectively lower the noise figure of the full-band amplifier, the present embodiment adopts the following multiplexing-demultiplexing scheme: the entire band is first split into two primary bands, and each primary band is further subdivided into smaller sub-bands, such that insertion loss across each sub-band is substantially uniform. Such multiplexing-demultiplexing operations are implemented by dielectric-film filters. Introducing the Raman pump wavelength and mixing distributed Raman fiber amplifiers with doped fiber amplifiers may achieve a low-noise full-band fiber amplifier. However, due to the wide band of the full-band amplifier, the Raman pump wavelength coincides with the sub-band signal band, which poses great difficulties in the multiplexing process. In this embodiment, the Raman pump wavelengths of each sub-band are integrated as much as possible to act as a unified Raman pump unit. Since Raman pump wavelengths coincide with the sub-band signal wavelengths, the Raman pump wavelength is transmitted in the opposite direction of the signal. In addition, the Raman pump wavelength is coupled into the circuit via a circulator, so as not to affect the demodulation of the signal.

In this embodiment, the Raman pump light of each sub-band is concentrated together. Thus, on one hand, the same wavelength in different transmission directions can be combined via a circulator; on the other hand, the power of the corresponding Raman pump wavelength can be automatically adjusted by the signal power of each sub-band, thereby overcoming the problem of conflicts between the full-band Raman pump wavelength and the signal wavelength, and achieving a low-noise full-band fiber amplifier.

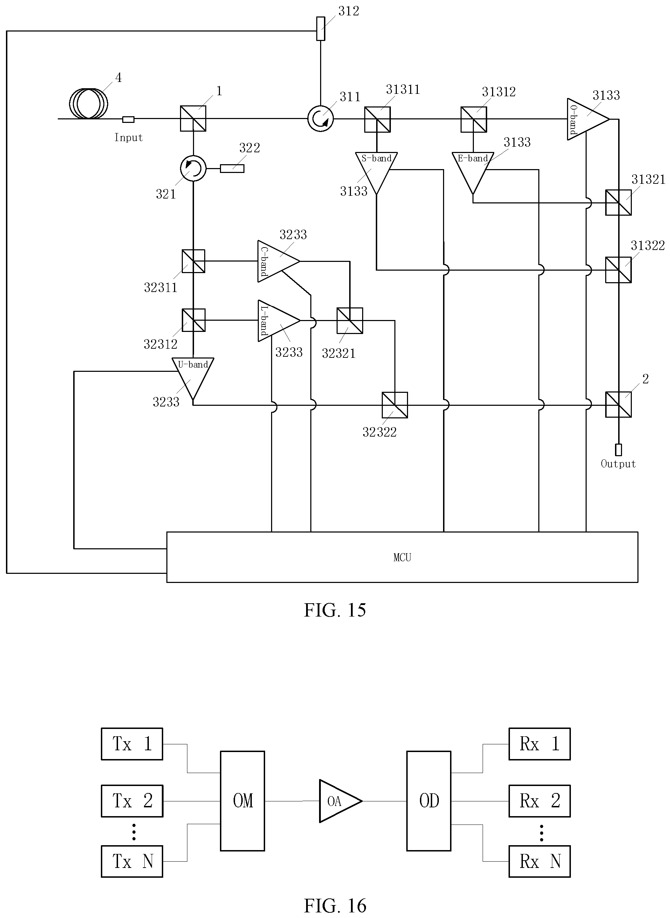

In an optional implementation, as shown in Fig. 15, the amplifier further comprises a microcontroller unit (MCU), which is connected to the control ports of each amplification unit. The MCU calculates overall pump power and Raman pump power of each amplification unit based on the input situation of each sub-band amplifier.

On the basis of the above embodiments, this embodiment further provides a signal transmission system that employs the aforementioned low-noise full-band fiber amplifier for signal amplification. As shown in Fig. 16, the signal transmission system may comprise sequentially connected optical transmitters (Tx 1, Tx 2, ..., Tx N in Fig. 16), an optical multiplexer (OM in Fig. 16), the aforementioned low-noise full-band fiber amplifier (OA in Fig. 16), an optical demultiplexer (OD in Fig. 16), and optical receivers (Rx 1, Rx 2, ..., Rx N in Fig. 16).

The above description sets forth only preferred embodiments of the present disclosure and is not intended to limit the scope of the present disclosure. Any modifications, equivalent substitutions, and improvements made within the spirit and principles of the present disclosure shall be fall within the protection scope of the present disclosure.

## Claims

1. A low-noise full-band fiber amplifier, **characterized in** comprising a first wavelength-division multiplexing component (1), a wavelength combining component (2), a first gain module (31), and a second gain module (32);
wherein the first gain module (31) is connected between a transmission port of the first wavelength-division multiplexing component (1) and a first input port of the wavelength combining component (2);
the second gain module (32) is connected between a reflection port of the first wavelength-division multiplexing component (1) and a second input port of the wavelength combining component (2);
a common port of the first wavelength-division multiplexing component (1) functions as a signal input port;
an output port of the wavelength combining component (2) functions as a signal output port;
the first wavelength-division multiplexing component (1) is configured to demultiplex the full-band light from the signal input port to generate a first half-band light and a second half-band light;
the first gain module (31) is configured to apply forward doped-fiber amplification and backward Raman amplification to the first half-band light to produce a first amplified half-band signal; the second gain module (32) is configured to apply forward doped-fiber amplification and backward Raman amplification to the second half-band light to produce a second amplified half-band signal;
the wavelength combining component (2) is configured to wavelength-multiplex the first amplified half-band signal and the second amplified half-band signal to generate an amplified full-band signal.

2. The low-noise full-band fiber amplifier of claim 1, wherein the first gain module (31) comprises a first circulating component (311), a first Raman pump component (312), and a first amplification component (313);
a first port of the first circulating component (311) is connected to the first Raman pump component (312); a second port of the first circulating component (311) functions as an input port of the first gain module (31); a third port of the first circulating component (311) is connected to a signal input port of the first amplification component (313); and a signal output port of the first amplification component (313) functions as an output port of the first gain module (31);
the first circulating component (311) is configured to forward-propagate the first half-band light to the first amplification component (313), and the first amplification component (313) is configured to apply doped-fiber amplification to the first half-band light;
the first Raman pump component (312) is configured to output first Raman light that matches the first half-band light;
the first circulating component (311) is further configured to back-propagate the first Raman light to the transmission port of the first wavelength-division multiplexing component (1), so that the first wavelength-division multiplexing component (1) multiplexes the first Raman light and the second Raman light to generate full Raman light, and back-propagates the full Raman light to a remote transmission optical fiber (4) disposed at the signal input port to perform backward Raman amplification on the full Raman light propagating within the remote transmission optical fiber (4).

3. The low-noise full-band fiber amplifier of claim 2, wherein the first amplification component (313) comprises a first demultiplexing unit (3131), a first wavelength combining unit (3132), and a plurality of first amplification units (3133);
an input port of the first demultiplexing unit (3131) functions as a signal input port of the first amplification component (313);
one first amplification unit (3133) is connected between each output port of the first demultiplexing unit (3131) and a corresponding input port of the first wavelength combining unit (3132);
the first demultiplexing unit (3131) is configured to demultiplex the first half-band light to generate a plurality of sub-band light;
the first amplification unit (3133) is configured to apply forward doped-fiber amplification to the corresponding sub-band light to generate amplified sub-band signals; and
the first wavelength combining unit (3132) is configured to wavelength-multiplex the plurality of amplified sub-band signals to generate the first amplified half-band signal.

4. The low-noise full-band fiber amplifier of claim 3, wherein when the fiber amplifier comprises N amplification units, the fiber amplifier further comprises a second wavelength-division multiplexing component (5), a first coupling component (6), and a first fiber pump component (7);
a common port of the second wavelength-division multiplexing component (5) is connected to a signal output port of an i-th amplification unit;
a transmission port of the second wavelength-division multiplexing component (5) is coupled to a signal transmission path;
a reflection port of the second wavelength-division multiplexing component (5) is connected to a first input port of the first coupling component (6);
the first fiber pump component (7) is connected to a second input port of the first coupling component (6), and each output port of the first coupling component (6) is connected to a pump input port of a corresponding amplification unit;
the first fiber pump component (7) is configured to generate pump light;
the second wavelength-division multiplexing component (5) is configured to demultiplex output light of the i-th amplification unit into signal light and residual pump light, so that the signal light continues to transmit along the signal transmission path, and the residual pump light is transmitted to the first coupling component (6);
the first coupling component (6) is configured to combine the pump light and the residual pump light and then transmit the combined light to the pump input of the corresponding amplification unit, such that the residual pump light from the i-th amplification unit is directed into the corresponding amplification unit for optical amplification;
the amplification unit is a first amplification unit (3133) and/or a second amplification unit (3233).

5. The low-noise full-band fiber amplifier of claim 4, wherein the transmission port of the second wavelength-division multiplexing component (5) is further connected to an isolator (9) or a gain flattening filter (10).

6. The low-noise full-band fiber amplifier of claim 3, wherein the first demultiplexing unit (3131) comprises a plurality of serially cascaded demultiplexers.

7. The low-noise full-band fiber amplifier of claim 6, wherein when the full-band light comprises 6 bands of light, the first demultiplexing unit (3131) comprises two serially cascaded demultiplexers: a first demultiplexer (31311) and a second demultiplexer (31312);
a first output port of the first demultiplexer (31311) is connected to an input port of the second demultiplexer (31312);
an input port of the first demultiplexer (31311) functions as the input port of the first demultiplexing unit (3131);
a second output port of the first demultiplexer (31311), a first output port of the second demultiplexer (31312), and a second output port of the second demultiplexer (31312) function as respective output ports of the first demultiplexing unit (3131);
the first demultiplexer (31311) is configured to demultiplex the first half-band light to generate first sub-band light and remaining band light, and the second demultiplexer (31312) is configured to demultiplex the remaining band light to generate second sub-band light and third sub-band light.

8. The low-noise full-band fiber amplifier of claim 3, wherein the first wavelength combining unit (3132) comprises a plurality of serially cascaded multiplexers.

9. The low-noise full-band fiber amplifier of claim 8, wherein when the full-band light comprises 6 bands of light, the first wavelength combining unit (3132) comprises two serially cascaded multiplexers: a first multiplexer (31321) and a second multiplexer (31322);
an output port of the first multiplexer (31321) is connected to a first input port of the second multiplexer (31322);
a first input port of the first multiplexer (31321), a second input port of the first multiplexer (31321), and a second input port of the second multiplexer (31322) respectively function as respective input ports of the first wavelength combining unit (3132);
an output port of the second multiplexer (31322) functions as an output port of the first wavelength combining unit (3132);
the first multiplexer (31321) is configured to multiplex the first amplified sub-band signal and the second amplified sub-band signal to generate an amplified partial band signal; and
the second multiplexer (31322) is configured to multiplex the amplified partial band signal and the third amplified sub-band signal to generate the first amplified half-band signal.

10. The low-noise full-band fiber amplifier of claim 3, wherein each first amplification unit (3133) is an erbium-doped fiber amplifier or a bismuth-doped fiber amplifier.

11. The low-noise full-band fiber amplifier of claim 2, wherein the first circulating component (311) is a circulator.

12. The low-noise full-band fiber amplifier of claim 1, wherein the second gain module (32) comprises a second circulating component (321), a second Raman pump component (322), and a second amplification component (323);
a first port of the second circulating component (321) is connected to the second Raman pump component (322); a second port of the second circulating component (321) functions as an input port of the second gain module (32); a third port of the second circulating component (321) is connected to a signal input port of the second amplification component (323); and a signal output port of the second amplification component (323) is an output port of the second gain module (32);
the second circulating component (321) is configured to forward-propagate the second half-band light to the second amplification component (323), and the second amplification component (323) is configured to apply doped-fiber amplification to the second half-band light;
the second Raman pump component (322) is configured to output second Raman light that matches the second half-band light;
the second circulating component (321) is further configured to back-propagate the second Raman light to the reflection port of the first wavelength-division multiplexing component (1).

13. The low-noise full-band fiber amplifier of claim 12, wherein the second circulating component (321) is a circulator.

14. The low-noise full-band fiber amplifier of any one of claims 1-13, wherein the full-band light comprises one or more bands selected from a group consisting of O-band, E-band, S-band, C-band, L-band, and U-band; the first half-band light covers the O-band, E-band, and S-band, and the second half-band light covers the C-band, L-band, and U-band.

15. The low-noise full-band fiber amplifier of any one of claims 1-13, wherein the first wavelength-division multiplexing component (1) is a wavelength division multiplexing device.

16. The low-noise full-band fiber amplifier of any one of claims 1-13, wherein the wavelength combining component (2) is a wavelength division multiplexing device.

17. A signal transmission system, wherein the low-noise full-band fiber amplifier according to any one of claims 1-16 is used for signal amplification.
